# EUROPEAN PATENT APPLICATION

(11) **EP 1 707 514 A1**
(43) Date of publication of application: **04.10.2006**
(21) Application number: 06380040.3
(22) Date of filing: 01.03.2006
(51) Int. Cl.: B65G 59/10

(54) **Container unstacking device for packing machines**

(30) Priority: 31.03.2005 ES 200500724
(71) Applicant: TALLERES DAUMAR S.A., 08918 Badalona (Barcelona) (ES)
(72) Inventor: Dauder Guardiola, Agustin, 08918 Badalona (Barcelona) (ES)
(74) Representative: Canadell-Isern, Roberto

(57) **Abstract**

**Container unstacking device for packing machines,** for a type of container that has an appreciably truncated, pyramidal shape and thin wills with rims on the edges of the longer and shorter sides of the opening, fundamentally characterized by the fact that it includes a mechanism to successively separate the units from a number of containers (1) that are initially stacked, made of two cylindrical, horizontal axles (6, 7) in parallel that respectively act on the rims (3, 3') of the shorter sides of the containers (1), resulting in separation of the unit that at any given time occupies the bottommost position of the stack, causing this unit to drop onto a lower stationary horizontal base (10).

## Description

This invention refers to a container unstacking device for packing machines.

As the title indicates, this is a device that is intended to separate a unit from a stack of containers for use in an automatic apportioning and packing machine, especially for small- and medium-sized objects such as pieces of fruit and similar.

### FIELD OF THE INVENTION

The field is that of construction of machines used to apportion products of the above mentioned type and to place them in containers that move along a certain circuit in order to receive the products in question.

The containers to which this invention refers may be of the type commonly called vessel or receptacle in the shape of a truncated, pyramidal box with thin walls and made of polystyrene or similar.

The containers in question are, after manufacture, supplied in stacks of multiple units that are fitted together by almost completely inserting them into each other, with the edges corresponding to their openings very close to each other. To successively deliver the containers and run them through the automatic apportioning machine, these containers must be successively separated from the stack and individually released to the circuit for circulation and reception of the apportioned products.

### BACKGROUND OF THE INVENTION

There are different devices available for unstacking containers in order to individually deliver them to an apportioning and filling machine. These devices operate on the basis of different mechanical principles.

An available device of this sort includes some pincers used to separate the edges of the containers and to secure them with some suctions cups attached to the bottom.

These available devices present some drawbacks stemming from their mechanical complexity, the relative difficulty of regulating them, and the need to made frequent adjustments.

### BRIEF DESCRIPTION OF THE INVENTION

The device described herein eliminates the above mentioned drawbacks and provides a practical, reliable system for the proposed purpose.

The containers are individually separated by a dual mechanism that acts on the sides of a stack of containers and secures them one by one by their edges, moves them downwards in a very brief period of time, and at the same time retains the rest of the stack until a new unit is removed. This process is complemented by applying some bursts of pressurized air to cause a rapid successive drop of the containers already separated from the stack.

Operating adjustments can be made to the new mechanism in the event of small differences in the initial position or size of the containers in a stack on entering the field of action.

The described device can be complemented with a device for moving the containers from the zone where they are unstacked to the zone where they are filled, and afterwards to the machine exit zone.

To facilitate the explanation, this description is accompanied by some drawings which show, by way of an illustrative, non-limitative example, a practical case of a container destacking device according to the principles in the claims.

### BRIEF DESCRIPTION OF THE DRAWINGS

Figures 1, 2 and 3 show the new device in front elevation, side elevation and floor plan views, respectively.
Figures 4 and 5 each show separately one of the essential components of the device, viewed from the side and in cross section by a drawing marked as V-V.
Figures 6 to 9 show in amplified detail how the containers are successively removed from the stack.
Figures 10 to 12 show the container conveyer device along its run next to the automatic packing machine.

### DETAILED DESCRIPTION OF THE INVENTION

The elements marked with numbers in the drawings correspond to the parts indicated below.

A container 1 for possible use with an apportioning machine and with this unstacking device is, in the example shown, a truncated, pyramidal body with a larger open base and formed along its longer and shorter edges by rims 2-2' and 3-3' with an approximately semicircular section.

Essentially, the units in a stack, loaded vertically at the top of the device on a support (not shown) located between trusses 4 and 5, are separated by means of a pair of identical, symmetrical elements each built of two axles 6 and 7 that act on rims 3 and 3' of the shorter sides of each of the containers.

These axles are horizontally arranged in parallel and turn in opposite directions, driven in synchronism by a drive mechanism, which in the example is a chain type drive but it can be another type of drive.

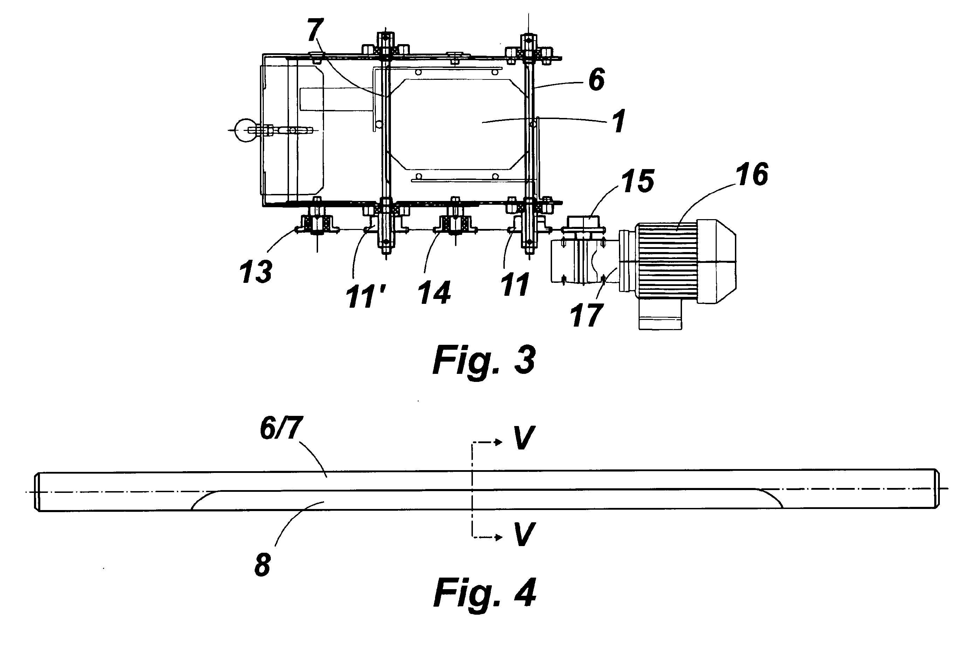

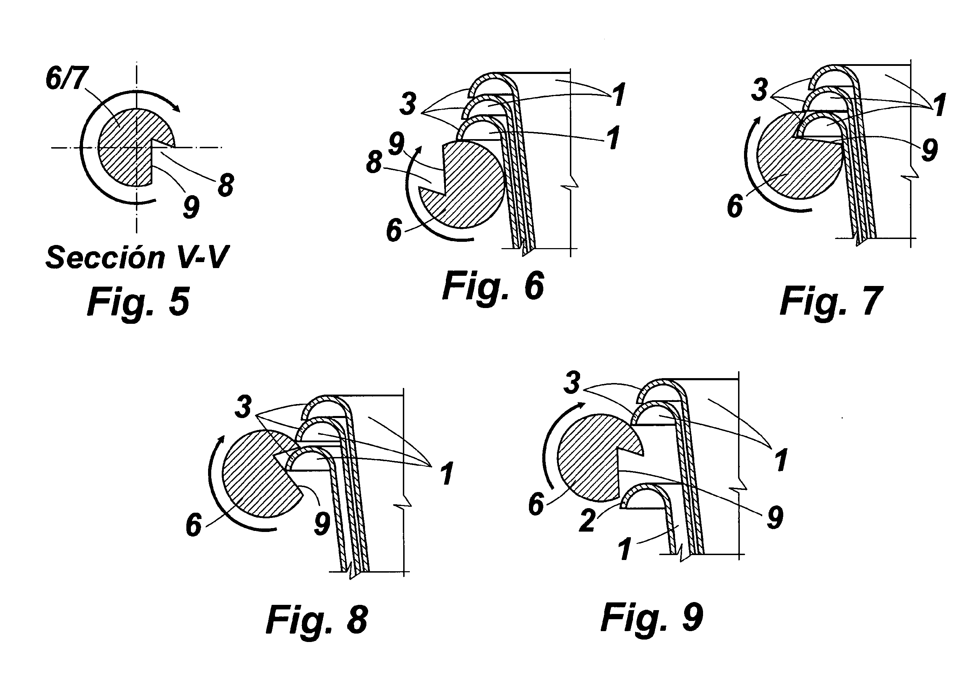

Each of these axles 6 and 7 has a longitudinal groove 8 (figures 4 and 5) of angular section and with an opening, e.g. between 45 and 90 degrees. The two grooves are arranged opposite each other, i.e. successively on exterior and interior sides of the device.

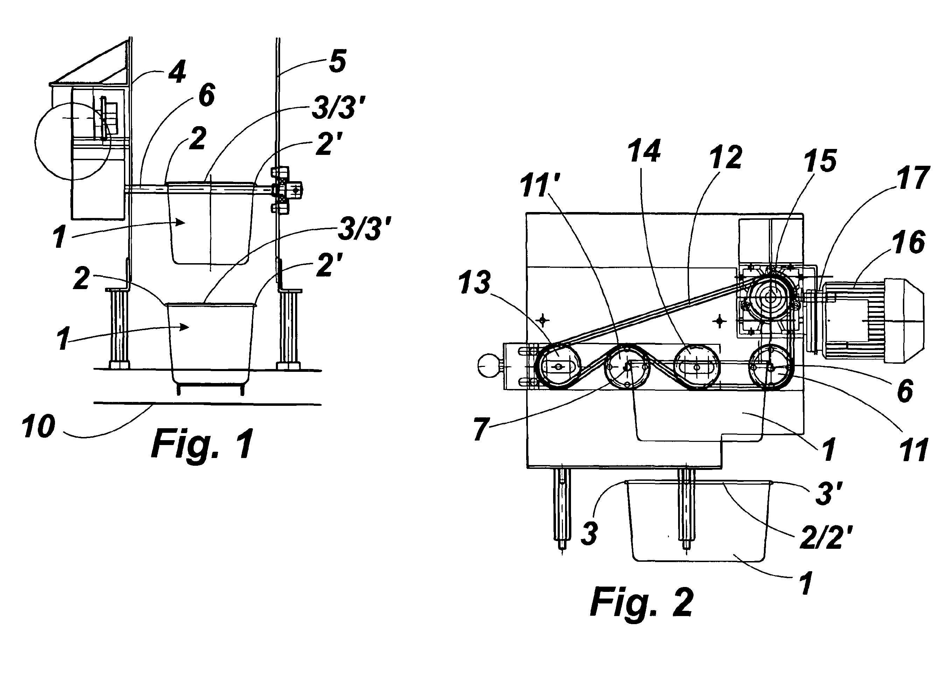

Figures 2 and 6 help to understand how container 1 at the bottom of a stack, located between the axles, is initially supported by its rims 3 and 3' on these axles, whose grooves 8 appear as exterior in figure 2.

An instant later, the turning of the axles brings grooves 8, according to figure 7, face to face with edges 2 of bottommost container 1, and these are supported on dihedral side 9 of each of the grooves.

As the axles continue to turn, edges 3 and 3' of container 1 slide, according to figure 8, over sides 9 of the grooves, while the remaining containers in the stack are again supported on the external portion of the axles.

Figure 9 indicates the separation phase of container 1 until it drops onto lower support base 10. To ensure and accelerate this drop, some bursts of pressurized air are applied to both sides of the container from a position slightly higher than its upper end.

Axles 6 and 7 are integral with cogwheels 11 and 11' driven by chain 12, associated with guide wheels 13, 14 and 15 and conventionally actuated by an electric motor 16 with speed reducer and step converter device 17.

Small size or position differences that may occur in the stacks of containers can be eliminated by adjusting the device mechanisms, particularly with separation of the centers of the cogwheels or rotation of the axles in relation to their respective centers.

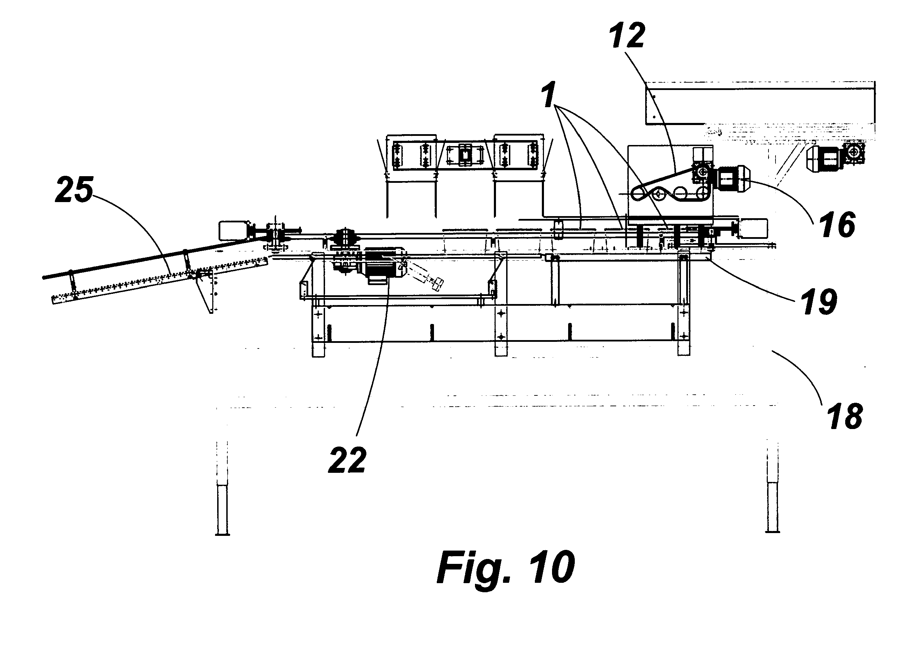

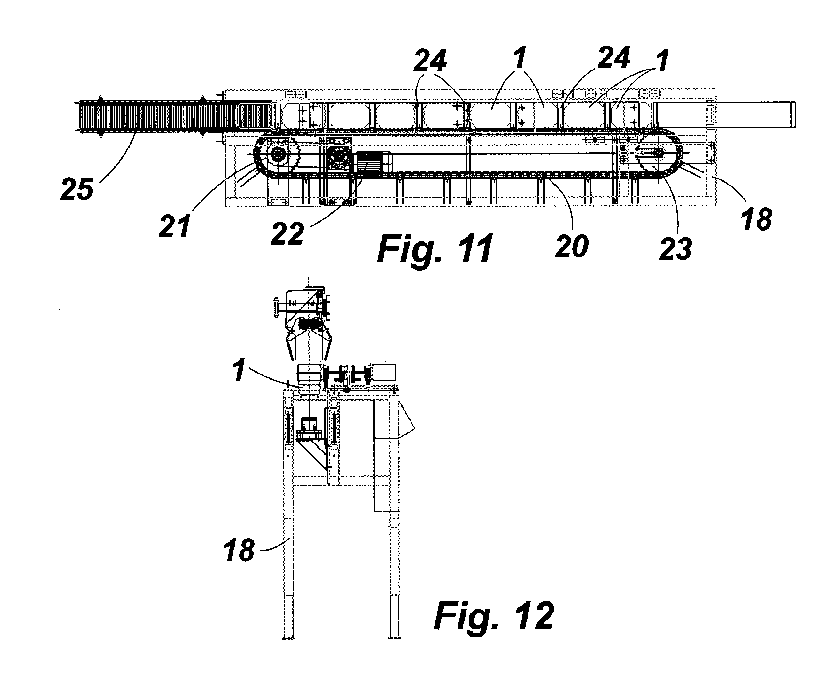

The container conveyor device shown in figures 10 to 12 includes, on frame 18 associated with the general machine frame, a stationary, longitudinal and horizontal support 19 of base 10 on which the containers are successively placed, a chain mechanism 20, a propulsion cogwheel 21 actuated by an electric motor 22 and guide wheel 23, and some preferentially rectangular shaped blades or arms 24 connected to the chain at regular distances corresponding to the length of the containers, which when full are pushed towards a roller belt 25 for exiting the machine.

The invention, in keeping with its essence, may be put into practice in other ways that differ in detail from the execution indicated by way of example in the description, and which will be equally covered by the protection being claimed. It thus may be constructed in any way and size with the most suitable materials and means, as this is all included in the spirit of the claims.

## Claims

1. Container unstacking device for packing machines, for a type of container that has an appreciably truncated, pyramidal shape and thin wills with rims on the edges of the longer and shorter sides of the opening, **characterized *by*** the fact that it includes a mechanism to successively separate the units from a number of containers (1) that are initially stacked, made of two cylindrical, horizontal axles (6, 7) in parallel that respectively act on the rims (3, 3') of the shorter sides of the containers (1), resulting in separation of the unit that at any given time occupies the bottommost position of the stack, causing this unit to drop onto a lower stationary horizontal base (10).

2. Container unstacking device for packing machines according to claim 1, **characterized *by*** the fact that each of the cylindrical axles (6, 7) for moving the containers (1) presents a longitudinal grooved recess (8) of angular section on its lateral surface, which is intended to successively receive the lateral rims (3, 3') of the stacked units and cause them to slide through the inside of the recess until the container drops, while the cylindrical surface of the axle, by its rotating movement, serves as a support for the rims (3, 3') of the upper units of the stacks.

3. Container unstacking device for packing machines according to the preceding claims, ***characterized by the fact*** that the cylindrical axles (6, 7) turn in synchronization in reverse directions and are actuated by a combined drive mechanism.

4. Container unstacking device for packing machines according to the preceding claims, **characterized by** the fact that the dihedral angle formed by the internal faces of the grooved recess (8) of each of the rotating axles (6, 7) has an opening preferentially between 45 and 90 degrees.

5. Container unstacking device for packing machines according to the preceding claims, **characterized *by*** the fact that the positions of the rotating axles (6, 7) and the positions of the elements of their combined drive mechanism are adjustable to compensate for small differences in the container stack positions.

6. Container unstacking device for packing machines according to the preceding claims, ***characterized by*** the fact that the units (1) that drop onto the lower stationary base (10) in their progress towards the filling station of a packing machine are moved advantageously by means of a chain drive mechanism that includes a number of preferentially rectangular shaped blades (24) mounted on the chain at distances corresponding to the length of the containers being moved.
